# EUROPEAN PATENT SPECIFICATION

(11) **EP 3 069 063 B1**
(45) Date of publication and mention of the grant of the patent: **02.01.2019**
(21) Application number: 14861502.4
(22) Date of filing: 10.11.2014
(51) Int. Cl.: F16L 11/12, F16L 11/08, F16L 33/01, G01M 5/00, G01D 5/353, G01K 1/14, G01K 11/32

(54) **AN ASSEMBLY COMPRISING AN UNBONDED FLEXIBLE PIPE AND AN END-FITTING**
ANORDNUNG MIT EINEM NICHT VERBUNDENEN SCHLAUCH UND EINEM ENDANSCHLUSSSTÜCK
ENSEMBLE COMPRENANT UN TUYAU FLEXIBLE NON COLLÉ ET UN EMBOUT

(30) Priority: 12.11.2013 DK 201370672
(43) Date of publication of application: 21.09.2016
(73) Proprietor: National Oilwell Varco Denmark I/S, 2605 Brøndby (DK)
(72) Inventor: NIELSEN, Karsten Gorm, DK-3450 Allerød (DK)
(74) Representative: Hegner & Partners A/S
(86) International application number: PCT/DK2014/050379
(87) International publication number: WO 2015/070871

(56) References cited:
- WO-A1-2011/042023
- WO-A1-2011/042023
- WO-A1-2012/059729
- WO-A1-2012/059729
- WO-A1-2012/097817
- WO-A1-2012/097817

## Description

### TECHNICAL FIELD

The present invention relates to an assembly comprising an unbonded flexible pipe and an associated end-fitting, where the flexible pipe comprises a plurality of layers and is suitable for offshore and subsea transportation of fluids like hydrocarbons, CO2, water and mixtures hereof.

### BACKGROUND ART

Unbonded flexible pipes as well as end-fittings therefore and assemblies thereof are well known in the art and are for example described in "Recommended Practice for Flexible Pipe", ANSI/API 17 B, fourth Edition, July 2008, and the standard "Specification for Unbonded Flexible Pipe", ANSI/API 17J, Third edition, July 2008.

Such pipes usually comprise an inner liner also often called an inner sealing sheath or an inner sheath, which is the innermost sealing sheath and which forms a barrier against the outflow of the fluid which is conveyed in the bore of the pipe, and one or more armoring layers. Often the pipe further comprises an outer protection layer which provides mechanical protection of the armor layers. The outer protection layer may be a sealing layer sealing against ingress of sea water. In certain unbonded flexible pipes one or more intermediate sealing layers are arranged between armor layers.

The term "unbonded" means in this text that at least two of the layers including the armoring layers and polymer layers are not bonded to each other. In practice the known pipe normally comprises at least two armoring layers located outside the inner sealing sheath and optionally an armor structure located inside the inner sealing sheath, normally referred to as a carcass.

The above-mentioned type of flexible pipes is used, among other things, for off-shore as well as some on-shore applications for the transport of fluids and gases. Flexible pipes can e.g. be used for the transportation of fluids where very high or varying pressures exist along the longitudinal axis of the pipe, such as riser pipes which extend from the seabed up to an installation on or near the surface of the sea, pipes for transportation of liquid and gases between installations, pipes which are located at great depths on the seabed, or pipes between installations near the surface of the sea.

In order to monitor the pipe e.g. with respect to temperature, strain, pressure and other along the length of the pipe it is well known to incorporate fiber sensors into the unbonded flexible pipe e.g. between the respective layers or within layers. Unbonded flexible pipes comprising one or more incorporated fiber sensors are e.g. described in US7024941, WO2008077410A1, WO 2012/059729 and EP 2065551. These prior art unbonded flexible pipes comprise one or more fiber sensors incorporated at positions radially outwards to the innermost sealing sheath.

WO 2011/042023 describes an unbonded flexible pipe with an optical fiber incorporated in its bore, i.e. radially inwards to the innermost sealing sheath. Measurements obtained in the bore can for example comprise temperature and/or pressure which can be used to optimize production and to reduce risk of formation and deposition of hydrates in the bore. Other measurements, such as chemical measurements, strain and/or wear can also be performed using an optical fiber the bore.

However, optical fibers are generally relatively sensitive to mechanical impacts. Since it is generally not possible to guide the optical fiber through the innermost sealing sheath, the optical fiber is guided out of the bore at the end-fitting connected to an end of the unbonded flexible pipe. Due to the high internal and/or external pressure which the unbonded flexible pipe will be subjected to in use, the formation of stress in the connection between the end-fitting and the unbonded flexible pipe can be very high and varying which makes it difficult to ensure a safe exit from the bore of the optical fiber.

### THE INVENTION

An object of the invention is to provide an assembly comprising an unbonded flexible pipe and an end-fitting connected to the pipe, where an optical fiber is arranged in the bore of the unbonded flexible pipe and exits the bore via the end-fitting with a relatively low risk of damaging the unbonded flexible pipe and the optical fiber when the assembly is in use.

A further object is to provide an assembly comprising an unbonded flexible pipe and an end-fitting connected to the pipe, where an optical fiber is arranged in the bore of the unbonded flexible pipe and where a relatively safe exit of the optical fiber from the bore is provided in a simple and cost effective way.

This and other objects have been solved by the invention as defined in the claims and as described herein below.

It has been found that the invention and embodiments thereof have a number of additional advantages which will be clear to the skilled person from the following description.

According to the invention it has been found that the by ensuring a safe protection of the optical fiber in the area where the innermost sealing sheath is fixed in the end-fitting, the optical fiber can be arranged to safely exits the bore via the end-fitting with low risk of damaging the unbonded flexible pipe including the innermost sealing sheath.

A safe exit of the optical fiber from the bore is provided in a simple and cost effective way.

The assembly of the invention comprises an unbonded flexible pipe and an end-fitting. The end-fitting is associated with the unbonded flexible pipe in that a plurality of layers of the unbonded flexible pipe is terminated in the end-fitting.

In an embodiment the assembly comprises an unbonded flexible pipe and an associated end-fitting having a through opening with a centerline and a front and a rear end, the unbonded flexible pipe comprises an innermost sealing sheath defining a bore with a centerline and a carcass arranged inside the innermost sealing sheath wherein the innermost sealing sheath and the carcass extend into the through opening via the front end of the end-fitting wherein the innermost sealing sheath is fixed in an annular sealing to the end-fitting, the carcass extends beyond the annular sealing, the unbonded flexible pipe further comprises an optical fiber in the bore, the fixing of the carcass to the end-fitting comprises a lock nut, optionally comprising a lock nut cover, wherein the lock nut or optionally the lock nut cover comprises a guiding groove, the optical fiber exits from the carcass and via the guiding groove out of the end-fitting.

Thus, a guiding groove for guiding the optical fiber is provided in relation to the lock nut. This means that the guiding groove is provided in the lock nut or in the vicinity of, such as about 0 to 1 cm from the surface of the lock nut, or adjacent to the lock nut, e.g. in a lock nut cover covering the lock nut.

In an embodiment the guiding may be provided in the lock nut itself. In an embodiment where the lock nut comprises a lock nut cover the guiding groove may be provided in the lock nut cover. In yet an embodiment the guiding groove may be provided in the wall part of the end-fitting surrounding the lock nut. The guiding groove serves to protect the optical fiber when it exits from the carcass of the unbonded flexible pipe.

The end-fitting has a through opening with a centerline and a front and a rear end. The rear end of the end-fitting is advantageously constructed to be connected to another end-fitting rear end or to a floating or fixed facility as described further below. The unbonded flexible pipe comprises an innermost sealing sheath defining a bore with a centerline and a carcass arranged inside the innermost sealing sheath. The end-fitting can advantageously be as the end-fitting described in WO2012126999A1, WO 2012/022908, US8220129B2, US7204524B2, WO2004001269A1, US6360781B1, US6412825B1 or US6273142B1 optionally modified as described herein.

The carcass mainly has the purpose of protecting the innermost sealing sheath against collapsing when subjected to compressive forces e.g. mechanical forces acting on the pipe or compressive fluids squeezing the innermost sealing sheath such as hydrostatic pressure. The innermost sealing sheath has the purpose of providing a barrier against outflow of a fluid transported in the bore of the pipe. The innermost sealing sheath is essentially liquid impermeable but since it usually is of polymer, small amounts of the fluid transported in the pipe may migrate through the innermost sealing sheath. Different approaches have been provided in the prior art unbonded flexible pipe to limit such migrating fluid, e.g. by incorporating neutralizing chemical components, or physical barrier components such as clay silicates. At present the most promising solution for reducing migration is to apply the innermost sealing sheath as a multilayer sheath comprising a polymer layer and a film layer interfacially bonded to each other such as described in WO2005028198. Any of these methods for reducing migration through the innermost sealing sheath may advantageously be combined with the present invention.

The innermost sealing sheath and the carcass extend into the through opening via the front end of the end-fitting. The innermost sealing sheath is fixed in an annular sealing to the end-fitting. The carcass extends beyond the annular sealing. The unbonded flexible pipe further comprises an optical fiber in the bore wherein the optical fiber is arranged in a groove of the carcass in at least a sealing length section where the optical fiber passes the annular sealing.

The phrase "where the optical fiber passes the annular sealing" means where the optical fiber is placed directly radially inside the annular sealing e.g. with one or more films or foils and/or the carcass at least partly arranged in between.

The sealing length section means the sealing length section of the groove wherein the optical fiber is placed when it is directly radially inside the annular sealing.

Due to this arrangement of the optical fiber, the optical fiber can safely pass the annular sealing even where high compression forces are applied to ensure a safe sealing of the innermost sealing sheath.

The term 'measure' in measure/measuring a parameter e.g. pressure includes both a direct measure as well as a measurement of a related parameter by which the parameter in question can be calculated. The terms 'measure' and 'determine' are used interchangeably.

The term "sealing sheath" is herein used to designate a generally liquid impermeable layer, normally comprising or consisting of polymer. The term "inner sealing sheath" designates the innermost sealing sheath. The term "intermediate sealing sheath" means a sealing sheath which is not the inner sealing sheath and which comprises at least one additional layer on its outer side. The term "outer sealing sheath" means the outermost sealing sheath.

In all determinations of size and structure the pipe should be in un-loaded condition unless specifically stated otherwise.

The term "in radial direction outwards" as well as "radially outwards" means a direction from the axis of the pipe and radially outwards. The term "in radial direction inwards" as well as "radially inwards" means a direction opposite to radially outwards. The term "in radial direction" as well as "radially" means either radially outwards or radially inwards.

The terms "inside" and "outside" a layer of the pipe are used to designate the relative distance to the axis of the pipe, such that "inside a layer" means the area encircled by the layer i.e. with a shorter axial distance than the layer and "outside a layer" means the area not encircled by the layer and not contained by the layer, i.e. with a shorter axial distance than the layer.

The term "substantially" should herein be taken to mean that ordinary product variances and tolerances are comprised.

The term "cross-wound layers" means that the layers comprise wound elongate elements that are wound in opposite direction relative to the longitudinal axis of the pipe where the angle to the longitudinal axis can be equal to or different from each other.

The term "winding direction" means winding direction relative to the longitudinal axis of the unbonded flexible pipe unless otherwise specified.

It should be emphasized that the term "comprises/comprising" when used herein is to be interpreted as an open term, i.e. it should be taken to specify the presence of specifically stated feature(s), such as element(s), unit(s), integer(s), step(s) component(s) and combination(s) thereof, but does not preclude the presence or addition of one or more other stated features.

The annular sealing fixing the innermost sealing sheath to the end-fitting advantageously has equal width along its annular extent, where the width is determined in length direction of the center axis of the pipe. However, it would not be a deviation from the present invention to provide the annular sealing with varying width along its annular extent.

The optical fiber is advantageously a fiber sensor for use in monitoring at least one parameter. Advantageously the optical fiber forms part of a sensor arrangement. The optical fiber can in principle be any kind of optical fiber suitable for use in a sensor arrangement.

The optical fiber may e.g. be an optical fiber sensor selected from the optical fiber sensors described in WO 2011/042023 , e.g. for chemical sensing, for pressure sensing, for temperature sensing and/or for stress sensing.

The optical fiber may for example be arranged in the bore of the unbonded flexible pipe in a configuration as described in WO 2011/042023 with the modification of the present invention e.g. as defined in any one of the claims.

Advantageously the carcass has an inner face facing the centerline of the bore and an opposite outer face. In an embodiment the groove in which the optical fiber is arranged is provided in the inner face in at least a part of the sealing length section.

To provide increased protection of the optical fiber against mechanical influences from fluid flow and/or mechanical cleaning (e.g. using a pig) in the bore of the pipe, the groove in which the optical fiber is arranged in at least a part of the sealing length section is provided in the outer face of the carcass. Thereby the optical fiber can for example be protected in the groove between the innermost sealing sheath and the carcass.

In an embodiment the optical fiber is loosely arranged in the groove of the carcass in at least the sealing length section. The optical fiber may for example be arranged with an overlength - i.e. the length of the optical fiber is larger than the length of the groove. Thereby the risk of tearing the optical fiber e.g. during deployment is highly reduced.

In an embodiment the optical fiber is fixed in the groove of the carcass in at least a part of the sealing length section: the fixing preferably being provided by a fixing polymer such at epoxy. By fixing the optical fiber in the groove, the risk that the optical fiber slipping out of the groove and becoming damaged by squeezing is highly reduced.

In an embodiment the optical fiber exits the groove of the carcass at a position between the annular sealing and the rear end of the end-fitting. At the position where the optical fiber is leaving the groove, it is advantageously not subjected to any substantial bends, but gradually deviates from the curve the senor followed in the groove. Where the groove is a helical groove the optical sensor preferably continues being helically wound for at least 10 % of a turn around the bore of the pipe, such as at least about half such as preferably at least about a whole turn around the bore of the pipe

The phrase "where the optical fiber passes the annular sealing" means where the optical fiber is placed directly radially inside the annular sealing e.g. with one or more films or foils and/or the carcass at least partly arranged in between.

Advantageously the carcass is fixed to the end-fitting along an annular fixing line at a position between the sealing length section and the rear end of the end-fitting. The fixing of the carcass preferably comprises that the carcass is fixed to the end-fitting at least partly be a mechanical fixing. Preferably the fixing of the carcass comprises both a mechanical fixing and a chemical fixing. The chemical fixing can for example comprise a fixing using epoxy.

In an embodiment the fixing of the carcass to the end-fitting comprises a mechanical fixing comprising a lock nut. Preferably the lock nut is fixed to the carcass e.g. by screwing it onto the carcass and the end-fitting comprises an annular holding groove into which the lock nut is placed. An example of a suitable fixing of a carcass to an end-fitting is described in US 6,360,781.

In an embodiment the lock nut is covered by a lock nut cover preferably of polymer, such as a polymer selected from polyamide, polyethylene, rubber, silicone or mixtures thereof. Advantageously the lock nut cover is in form of a gasket.

Advantageously and for an even higher protection of the optical fiber, the lock nut or the lock nut cover comprises a guiding groove for protecting the optical fiber. The optical fiber is advantageously exits the groove of the carcass and via the guiding groove out of the end-fitting. Thereby an optimal protection of the optical fiber can be provided.

In an embodiment the end-fitting comprises an end-fitting guiding groove crossing the annular fixing line of the carcass, the optical fiber exits the groove of the carcass and via the end-fitting guiding groove out of the end-fitting.

In an embodiment the optical fiber exits the end-fitting via a passage in a wall section of the end-fitting, where the passage in the wall section of the end-fitting advantageously is arranged in the rear end of the end-fitting. In this embodiment it is advantageous that the optical fiber exits the groove of the carcass and via the end-fitting guiding groove and further via the passage in the wall section of the end-fitting. In an embodiment the optical fiber exits the groove of the carcass and via the passage in the wall section of the end-fitting.

The passage in the end-fitting is advantageously a passage that leads fully out of the end-fitting.

For a safe and durable sealing of the innermost sealing sheath to the end-fitting, the annular sealing preferably comprises one or more gaskets, such as one or more annular gaskets. Such gaskets are well known in the art.

In an embodiment the carcass comprises one or more carcass cavities filled with epoxy in the areas where the carcass is subjected to compression from the gaskets. Thereby any risk of deformation of the carcass due to pressure from the gasket is highly reduced.

In an embodiment the annular sealing comprises least one locking ring arranged outside the innermost sealing sheath and arranged to fix the innermost sealing sheath between the locking ring and the carcass. Such locking ring may add a high local pressure onto the carcass and where the carcass comprises one or more carcass cavities and one or more of these carcass cavities may advantageously be filled with epoxy in the areas where the carcass is subjected to compression from the locking ring. Thereby undesired local deformation of the carcass can be reduced or even avoided.

In an embodiment the innermost sealing sheath comprises at least one annular groove - e.g. provided using mechanical local compression - and the locking ring comprises or holds an annular rib to engage the annular groove. Thereby an increased and safe sealing can be provided. The annular rib preferably is or comprises a gasket. The innermost sealing sheath may for example be sealed to the end-fitting as described in 6,273,142.

The sealing length section of the groove may advantageously have a length of at least about 0.5 cm, such as from about 0.8 cm to about 10 cm or even to about 50 cm or longer. Advantageously the groove has a length of up to about 10 cm, such as from about 1 cm to about 5 cm. The optimal sealing length section depends largely on the structure of the carcass and the annular sealing.

Advantageously the optical fiber exits the groove of the carcass at a position between the annular sealing and the rear end of the end-fitting.

In an embodiment the optical fiber exits the groove of the carcass at a position between the annular sealing and a position of terminating the carcass.

In an embodiment the through opening of the end-fitting at least in a rear section between termination of the carcass and the rear end comprises a protection arrangement for the optical fiber. Preferably the protection arrangement is in the form of a protecting sleeve and/or a groove in the end-fitting. The optical fiber can be safely arranged in the protection arrangement.

The carcass may be as the carcass known from prior art modified in according to the present invention e.g. as defined in any one of the claims.

In an embodiment the carcass comprises at least one helically wound elongate armor element.

In an embodiment the carcass comprises a plurality of elongate element windings along the length of the pipe provided by the at least one elongate armor element wherein the plurality of elongate element windings are interlocked.

In an embodiment the carcass comprises a plurality of elongate element windings along the length of the pipe provided by the at least one elongate armor element wherein the plurality of elongate element windings are directly and/or indirectly interlocked with adjacent elongate element windings.

In an embodiment the carcass comprises a plurality of elongate element windings along the length of the pipe provided by the at least one elongate armor element wherein the plurality of elongate element windings are indirectly interlocked with adjacent elongate element windings by being interlocked using at least one locking element, such as at least one wound locking element.

Examples of structures of carcass suitable for use in the present invention and modified as described herein can be found in EP 1255944, EP 1269057, EP 1384026, EP 1475650, EP 1277007, EP 1269058, EP 1119684, US 6123114, US 6691743, US 6668867, US 5813439, WO 0242674, US 5730188, US 6354333, US 4549581, US 6192941, US 6283161, WO 0181809, WO 0036324, US 6454897, US 6408891 and US 6110550, WO2009106078, WO 2008113362, EP1937751, US 6,145,546, US 6,123,114, US 6,668,866 and/or as found in "Recommended Practice for Flexible Pipe", ANSI/API 17 B, fourth Edition, July 2008, and/or "Specification for Unbonded Flexible Pipe", ANSI/API 17J, Third edition, July 2008.

In an embodiment the carcass comprises a plurality of elongate element windings along the length of the pipe provided by the at least one elongate armor element wherein at least a part of the plurality of elongate element windings are indirectly interlocked with adjacent elongate element windings by being interlocked using at least one locking element, such as at least one wound locking element.

In an embodiment the at least one elongate armor element comprises a profiled element, preferably the at least one elongate armor element is in the form of at least two profiled elements, optionally partly or fully interlocked using at least one locking element, such as at least one wound and optionally folded locking element.

In an embodiment the at least one elongate armor element comprises a folded element, preferably elongate element windings of the at least one elongate armor element are partly or fully interlocked using at least one locking element, such as at least one profiled and wound locking element.

In an embodiment the carcass comprises at least one elongate folded armor element and at least one elongate profiled armor element, the at least one elongate folded armor element and the at least one elongate profiled armor element are helically wound and interlocked with each other.

In an embodiment the carcass comprises a plurality of cavities which in at least a part of the carcass that extends into the through opening are filled. Filling of such cavities can reduce any risk of local deformations of the carcass in the end-fitting in particular where the carcass in the end-fitting is subjected to local compression.

In an embodiment the carcass in its outer surface facing the innermost sealing sheath and/or the end-fitting comprises helical gap(s) between adjacent windings. Advantageously the helical gap(s) is/are at least partly filled with a polymer material, such as cured polymer material, preferably epoxy, in at least a part of the carcass that extends into the through opening of the end-fitting.

In an embodiment the carcass comprises a plurality of elongate element windings along the length of the pipe provided by the at least one elongate armor element wherein the carcass comprises an average gap between the supporting surface of adjacent elongate element windings which is about 3 mm or less, such as about 2 mm or less when the pipe is in an unloaded and unbent condition.

Advantageously the carcass is mainly of metal, such as a carcass comprising helically wound, folded and interlocked strips of steel.

In an embodiment the carcass comprises helically wound, profiled steel wires optionally interlocked with folded strips of steel.

Suitable material(s) for the innermost sealing sheath includes the materials usually applied for such sealing sheaths. In an embodiment the innermost sealing sheath is in the form of an extruded layer comprising or consisting of a fluoride containing polymer such as fluorinated alkoxyethylene (PFA), polytetrafluoroethylene (PTFE), polyvinylidene fluoride (PVDF) or mixtures thereof.

In an embodiment the innermost sealing sheath is in the form of an extruded layer comprising or consisting of polyvinylidene fluoride (PVDF) (copolymer or monopolymer), polyethylene (PS) (optionally cross-linked) and/or polyamide (PA 6, PA 11 or PA 12).

The unbonded flexible pipe may comprise any other layers such as known from the prior art for example from the standard "Recommended Practice for Flexible Pipe", ANSI/API 17 B, fourth Edition, July 2008, and the standard "Specification for Unbonded Flexible Pipe", ANSI/API 17J, Third edition, July 2008, e.g. a plurality of layers outside the innermost sealing sheath. Such layers preferably comprise from the innermost sealing sheath and out a pressure armor layer, a pair of cross wound tensile armor layers and a protection layer. Additional layers include anti-wear layers between armor layers, insulating layers, intermediate sealing layers and/or an anti-birdcage layer outside the outermost tensile layer to prevent the tensile armor layer from buckling.

All features of the invention including ranges and preferred ranges can be combined in various ways within the scope of the invention, unless there are specific reasons not to combine such features.

### BRIEF DESCRIPTION OF DRAWINGS

The invention will be explained more fully below in connection with preferred embodiments and with reference to the drawings in which:
FIG. 1 is a schematic side view of a flexible pipe with a carcass.
FIG. 2 is a cross-sectional view of a flexible pipe with a fiber sensor applied in a bore of a flexible pipe between an internal sheath and an internal armoring layer.
FIG. 3 is a cross-sectional view of a flexible pipe with a fiber sensor applied in a bore of a flexible pipe in contact with an inner side of an internal armoring layer.
FIG. 4 is a sectional view of a part of an assembly of the invention taken in the length direction of the carcass and showing the termination of the individual layers of the flexible pipe.
FIG. 5 is a schematic and sectional view of a part of the assembly of the invention showing only the termination of the sealing sheath and the carcass.
FIG. 6 is a schematic and sectional view of a part of another assembly of the invention showing only the termination of the sealing sheath and the carcass.
FIG. 7 is a schematic and sectional view of a part of yet another assembly of the invention showing only the termination of the sealing sheath and the carcass.
FIG. 8 is a schematic and sectional view of an assembly of the invention taken in the length direction of the carcass and showing the exit from the end-fitting of the optical fiber.
FIG. 9 is a schematic and sectional view of another assembly of the invention taken in the length direction of the carcass and showing the exit from the end-fitting of the optical fiber.
FIG. 10 is a perspective view of an assembly of the invention.

The figures are schematic and simplified for clarity and merely show details which are essential to the understanding of the invention, while other details are left out. Throughout the same reference numerals are used for identical or corresponding parts.

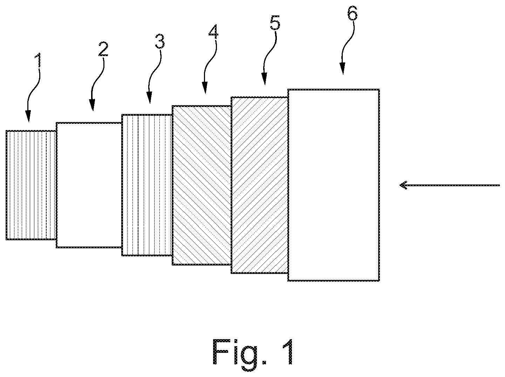

FIG. 1 is a schematic side view of a flexible pipe with a carcass.
The flexible pipe shown in Fig. 1 comprises an innermost sealing sheath 2, e.g. of high density poly ethylene (HDPE), cross linked polyethylene (PEX), Polyvinyldifluorid (PVDF) or polyamide (PA). The innermost sealing sheath 2 defines the bore of the pipe and has the purpose of preventing outflow of the fluid transferred in the bore of the pipe, indicated with the thick arrow. Inside the innermost sealing sheath 2 the pipe comprises a carcass 1. The carcass 1 is normally made of metal and has the main purpose of reinforcing the pipe against collapse as described above. For high strength unbonded pipes for offshore application a carcass is usually required in order to prevent collapse of the pipe.

On the outer side of the innermost sealing sheath 2, the pipe comprises a pressure armor layer 3 comprising helically wound armor element(s) of metal or composite material or combinations thereof, which is wound with an angle to the axis of the pipe of about 65 degrees or more, e.g. about 85 degrees. The pressure armor layer 3 is not liquid tight.

Outside the pressure armor layer 3 the flexible offshore pipe comprises a tensile armoring in the form of a first and a second tensile armor layer 4, 5 each comprising a plurality of helically wound elongate armor elements surrounding the pressure armor layer 3.

The elongate armor elements on the first tensile armor layer 4 are wound with a winding degree of about 55 degrees or less to the axis of the pipe in a first winding direction and the second tensile armor layer 5 is wound with a winding degree of about 60 degrees or less, such as between about 20 and about 55 degrees to the axis of the pipe in a second winding direction, which is the opposite direction to the first winding direction i.e. the two tensile armor layers 4, 5 are cross-wound. The pipe further comprises an outer protection sheath 6 which in the embodiment of Fig. 1 is a sealing sheath 6 protecting the armor layer mechanically and against ingress of sea water. In variations thereof the outer protection layer may be liquid pervious. The unbonded flexible pipe preferably comprises not shown tape layers between the armor layers 3, 5, 5. The tape layers are usually not liquid tight and may for example be in the form of a wound film. The unbonded flexible pipe may comprise other not shown layers such as described in the standard "Recommended Practice for Flexible Pipe", ANSI/API 17 B, fourth Edition, July 2008, and the standard "Specification for Unbonded Flexible Pipe", ANSI/API 17J, Third edition, July 2008.

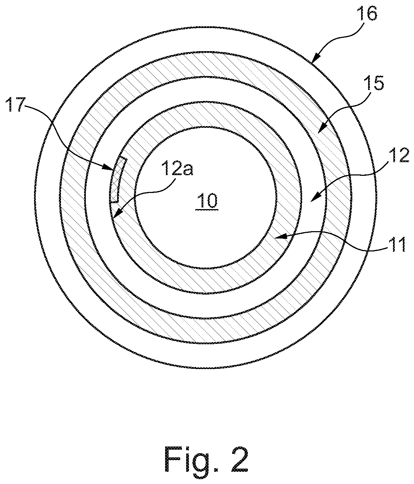

FIG. 2 is a cross-sectional view of a flexible pipe of the invention. The flexible pipe comprises an innermost sealing sheath 12, an annulus 15 comprising at least one outer armor layer surrounding the internal sheath 12 and an outer sheath 16. The innermost sealing sheath 12 has an inner surface 12A and the flexible pipe has a bore 10 surrounded by said inner surface 12A of said innermost sealing sheath 12. Inside the bore 10 the flexible pipe comprises an optical fiber 17 as described above. The optical fiber 17 is applied in contact with the inner surface 12A and may optionally be fixed to said inner surface 12A e.g. at distinguished sites along the length of the flexible pipe. The optical fiber 17 may advantageously be helically wound or may be applied in any other suitable configurations. Inside the innermost sealing sheath 12 the pipe comprises a carcass 11. The optical fiber 17 may additionally be arranged in a supporting element in at least a part of its length e.g. as described in WO 2011/042023.

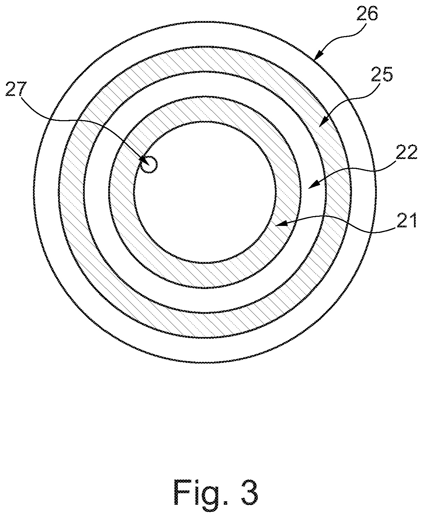

FIG. 3 is a cross-sectional view of another flexible pipe of the invention. The flexible pipe comprises an innermost sealing sheath 22, an annulus 25 comprising at least one outer armor layer surrounding the internal sheath 22 and an outer sheath 26. Inside the innermost sealing sheath 12 the pipe comprises a carcass 11. An optical fiber 27 is arranged inside the carcass. The optical fiber 27 may advantageously be helically wound or may be applied in any other suitable configurations. The optical fiber 27 may additionally be arranged in a supporting element in at least a part of its length e.g. as described in WO 2011/042023.

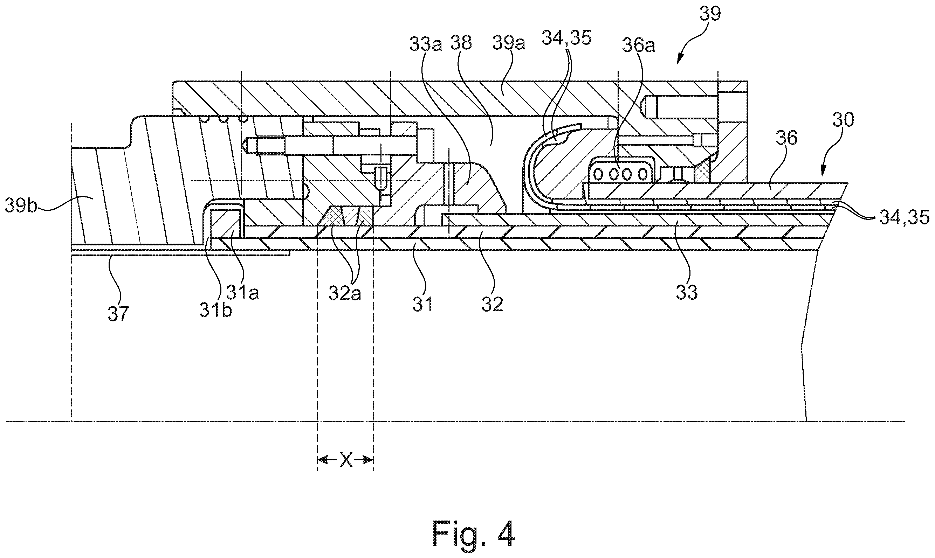

In FIG. 4 only a part of an embodiment of an assembly is shown. The assembly comprises an end-fitting 39 and an unbonded flexible pipe 30 terminated in the end-fitting 39. A sectional cut is taken through the assembly with the center axis as shown. Only one wall section is shown. The unbonded flexible pipe 30 comprises from inside and out a carcass 31, an innermost sealing sheath 32, a pressure armor layer 33, a pair of cross wound tensile armor layers 34, 35 and an outer sealing sheath 36. The end- fitting 39 comprises an outer casing 39a and an inner casing 39b. The end-fitting 39 further comprises a termination arrangement 36a for sealingly terminating the outer sheath 36. The pair of cross wound tensile armor layers 34, 35 is mechanically terminated by being fixed in the house 38 e.g. using epoxy or similar cement. The pressure armor layer 33 is mechanically terminated by a fixing arrangement 33a e.g. using well known methods. The innermost sealing sheath 32 is terminated in sealing length section X using a pair of annular locking and sealing elements 32a pressing the innermost sealing sheath 32 against the carcass 31. The carcass is terminated by a mechanical fixing element 31a e.g. comprising a lock nut which is fixed to the carcass 31 by screwing. The unbonded flexible pipe 30 comprises a not shown optical fiber between the innermost sealing sheath 32 and the carcass 31. The optical fiber is arranged in a groove of the carcass in at least the sealing length section X where the optical fiber passes the annular sealing. The fixing element 31a comprises a gasket 31b at least partly surrounding the fixing element 31b where it is in contact with the optical fiber. The optical fiber is guided from the carcass groove via a depression or groove in the gasket and out of the end-fitting e.g. via a protection arrangement in the form of a protection sleeve 37.

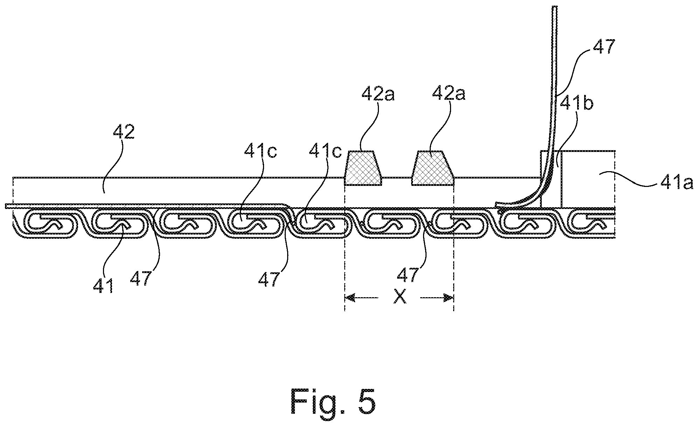

In Fig. 5 a schematic and sectional view of a part of an assembly slightly different from the assembly of Fig. 4 is shown where only part of an innermost sealing sheath 42 and a carcass 41 as well as their terminations are shown together with an optical fiber 47 arranged between the innermost sealing sheath 42 and the carcass 41.

The carcass 41 is terminated by a mechanical fixing element 41a, e.g. comprising a lock nut which is fixed to the carcass 41 by screwing. The fixing element 41a comprises a gasket 41b at least partly surrounding the fixing element 41a where it is in contact with the optical fiber 47, thereby protecting the optical fiber against damage from the often metallic fixing parts of the fixing element 41a. The innermost sealing sheath 42 is terminated in sealing length section X using a pair of annular locking and sealing elements 42a pressing the innermost sealing sheath 42 against the carcass 41. The optical fiber is arranged in a groove of the carcass 41 in at least the sealing length section X where the optical fiber passes annular locking and sealing elements 42a.

In the shown embodiment in Fig. 5 the groove in the carcass into which the optical fiber is arranged is a naturally formed groove which is provided by helically wound strip(s) which is folded and interlocked with adjacent windings to form the grove. Outside the end-fitting the optical fiber 47 will likely be damaged in such groove formed by the interlocked and folded strip when the unbonded flexible pipe is bent or subjected to other dynamic movements. Therefore it has never been suggested to apply an optical fiber in grooves of a carcass.

It should be observed that the optical fiber alternatively could be arranged in a groove of the carcass which was provided for this purpose only.

The carcass 41 comprises cavities 41c. Such cavities 41c are advantageously filled with a cement such as epoxy in the sealing section X where the carcass 41 is subjected to compression from the locking rings 42a.

The optical fiber 47 is guided from the carcass groove via a groove in the gasket 41b and out of the end-fitting. Advantageously a suitable groove may also be formed in an end of the innermost sealing sheath 42 placed adjacent to the gasket 41b.

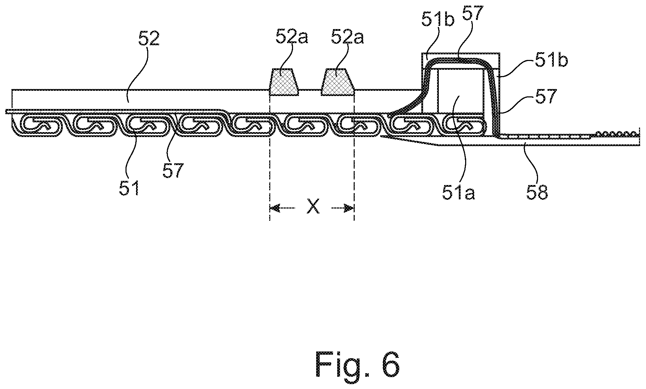

The embodiment of Fig. 6 is a variation of the embodiment of Fig. 5 showing only the corresponding elements, i.e. only a part of an innermost sealing sheath 52 and a carcass 51 as well as their terminations are shown together with an optical fiber 57 arranged between the innermost sealing sheath 52 and the carcass 51.

The carcass 51 is terminated by a mechanical fixing element 51a e.g. comprising a lock nut which is fixed to the carcass 51 by screwing. The fixing element 51a comprises a gasket 51b surrounding the fixing element 51b where it is in contact with the optical fiber 57. The innermost sealing sheath 52 is terminated in sealing length section X using a pair of annular locking and sealing elements 52a pressing the innermost sealing sheath 52 against the carcass 51. The optical fiber is arranged in a groove of the carcass 51 in at least the sealing length section X where the optical fiber passes annular locking and sealing elements 52a.

The optical fiber 57 is guided from the carcass groove via a groove in the gasket 51b covering the fixing element 51a where it is not facing the carcass 51 such that the optical fiber 57 can pass to the rear end of the end-fitting via the groove in the gasket and out of the end-fitting via a protection arrangement in the form of a protection sleeve 58.

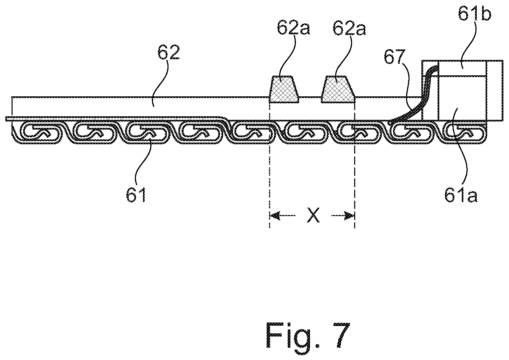

The embodiment of Fig. 7 is a variation of the embodiment of Fig. 6 showing only the corresponding elements, i.e. only a part of an innermost sealing sheath 62 and a carcass 61 as well as their terminations are shown together with an optical fiber 67 arranged between the innermost sealing sheath 62 and the carcass 61.

The carcass 61 is terminated by a mechanical fixing element 61a e.g. comprising a lock nut which is fixed to the carcass 61 by screwing. The fixing element 61a comprises a gasket 61b surrounding the fixing element 61b where it is in contact with the optical fiber 67. The innermost sealing sheath 62 is terminated in sealing length section X using a pair of annular locking and sealing elements 62a pressing the innermost sealing sheath 62 against the carcass 61. The optical fiber is arranged in a groove of the carcass 61 in at least the sealing length section X where the optical fiber passes annular locking and sealing elements 62a.

The optical fiber 67 is guided from the carcass groove via a groove in the gasket 61b covering the fixing element 61a where it is not facing the carcass 61 such that the optical fiber 67 can pass to the rear end of the end-fitting via the groove in the gasket and out of the end-fitting. The optical fiber 67 is helically wound also in the groove in the gasket 61b.

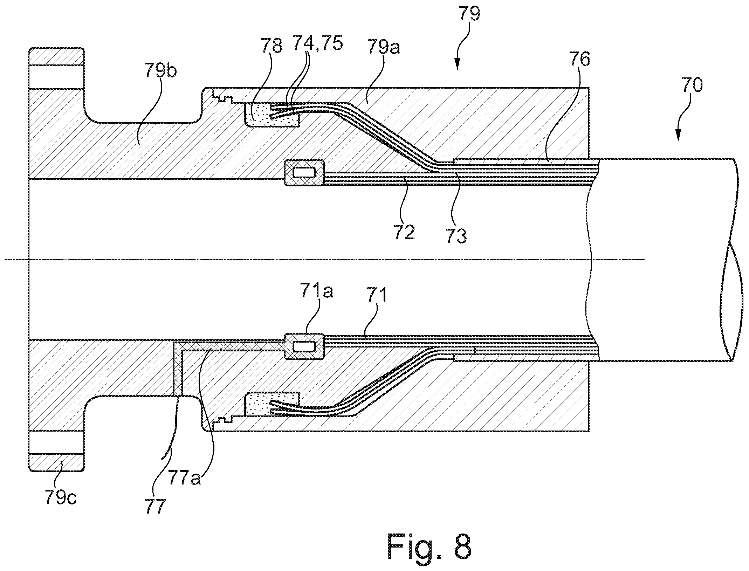

FIG. 8 shows an embodiment of an assembly of the invention comprising an unbonded flexible pipe 70 and an associated end-fitting 79 having a through opening with a centerline and a front and a rear end. The end-fitting 79 comprises an outer casing 79a and an inner casing 79b with a mounting flange 79c forming the rear end of the end-fitting 79.

The unbonded flexible pipe 70 comprises an innermost sealing sheath 72 and a carcass 71 arranged inside the innermost sealing sheath 72. The innermost sealing sheath 72 and the carcass 71 extend into the through opening via the front end of the end-fitting 79. The innermost sealing sheath 72 is fixed in a not shown annular sealing to the end-fitting 79. The carcass 71 extends beyond the annular sealing and is terminated by a mechanical fixing element 71a. Outside the innermost sealing sheath 72 the pipe 70 comprises a pressure armor 73 and a pair of cross wound tensile armor layers 74, 75 which are terminated in a cavity 78 using epoxy. Outside the tensile armor layers 74, 75 the pipe 70 comprises an outer sealing sheath 76. The unbonded flexible pipe further comprises an optical fiber 77 in the bore wherein the optical fiber is arranged in a not shown groove of the carcass 71 in at least a sealing length section where the optical fiber passes the annular sealing. The optical fiber 77 is guided from the carcass groove via a tube 77a out of the end-fitting 79.

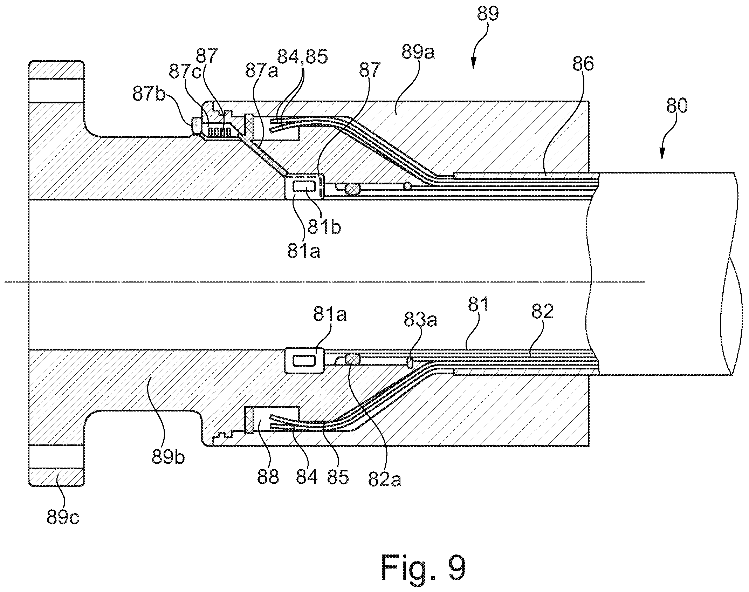

FIG 9 shows another embodiment of an assembly of the invention comprising an unbonded flexible pipe 80 and an associated end-fitting 89 having a though opening with a centerline and a front and a rear end. The carcass 89 comprises an outer casing 89a and an inner casing 89b with a mounting flange 89c forming the rear end of the end-fitting 89.

The unbonded flexible pipe 80 comprises an innermost sealing sheath 82 and a carcass 81 arranged inside the innermost sealing sheath 82. The innermost sealing sheath 82 and the carcass 81 extend into the through opening via the front end of the end-fitting 89. The innermost sealing sheath 82 is fixed in an annular sealing 82a to the end-fitting 89. The carcass extends beyond the annular sealing 82a and is terminated by a mechanical fixing element 81a comprising a gasket 81b. Outside the innermost sealing sheath 82 the pipe 80 comprises a pressure armor 83 and a pair of cross wound tensile armor layers 84, 85 which are terminated in a cavity 88 using epoxy. Outside the tensile armor layers 84, 85 the pipe 80 comprises an outer sealing sheath 86. The unbonded flexible pipe further comprises an optical fiber 87 in the bore wherein the optical fiber is arranged in a groove of the carcass 81 in at least the sealing length section provided by the annular sealing 82a where the optical fiber passes the annular sealing 82a. The optical fiber 87 is guided from the carcass groove via a tube 87a to an exit cavity 87c where it is applied in an overlength such as described in DK PA 2013 70245 which means that the optical fiber has a length section in the exit cavity which is longer than the length from the entrance end to the exit opening of the exit cavity 87c. The optical fiber 87 is connected to a lid 87b covering an exit opening. The lid 87b optionally comprises a connector for easy connection to a not shown processing system for feeding and reading the optical fiber.

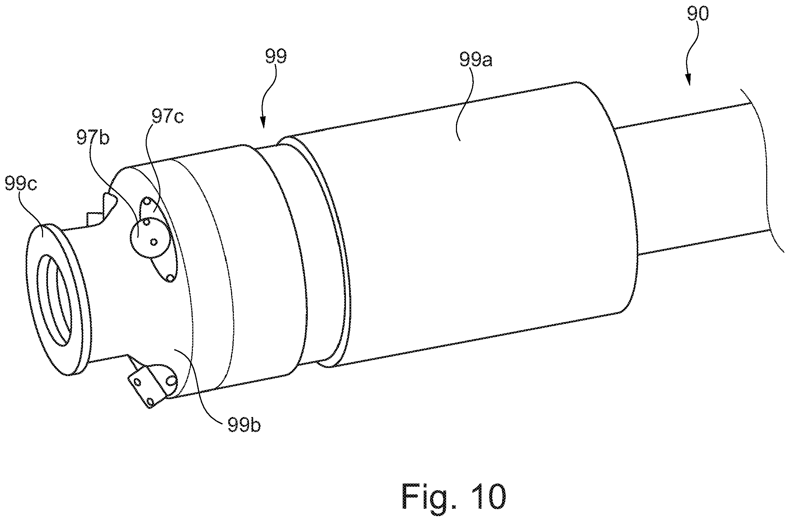

The assembly shown in Fig. 10 comprises an unbonded flexible pipe 90 and an end-fitting 99 comprising an outer casing 99a and an inner casing 99b with a mounting flange 99c for mounting the end-fitting 99 to another end-fitting , a platform or another element.

The end-fitting 99 comprises not shown exit cavities which each are covered with a lid 97c with a fiber termination 97b to which one or more not shown fibers are fixed. The not shown fibers are arranged in the bore of the unbonded flexible pipe 90 as described above.

## Claims

1. An assembly comprising an unbonded flexible pipe (30, 70, 80, 90) and an associated end-fitting (79, 89) having a through opening with a centerline and a front and a rear end, the unbonded flexible pipe comprises an innermost sealing sheath defining a bore with a centerline and a carcass (1, 31, 41, 51, 61, 71, 81) arranged inside the innermost sealing sheath (2, 32, 42, 52, 62, 72, 82) wherein the innermost sealing sheath (2, 72, 82) and the carcass (1, 31, 41, 51, 61, 71, 81) extend into the through opening via the front end of the end-fitting (39,79, 89, 99) wherein the innermost sealing sheath (2, 32, 42, 52, 62, 72, 82) is fixed in an annular sealing to the end-fitting (39, 79, 89, 99), the carcass (1, 31, 41, 51, 61, 71, 81) extends beyond the annular sealing, the unbonded flexible pipe further comprises an optical fiber (37, 47, 57, 67, 77, 87) in the bore, **characterized in that** the fixing of the carcass (1, 31, 41, 51, 61, 71, 81) to the end-fitting (39, 79, 89, 99) comprises a lock nut (31a, 41a, 51a, 61a), the optical fiber (37, 47, 57, 67, 77, 87) exits from the carcass (1, 31, 41, 51, 61, 71, 81) via a guiding groove out of the end-fitting (39, 79, 89, 99), said guiding groove is provided in the lock nut (31a, 41a, 51a, 61a) itself, in a lock nut cover (31b, 41b, 51b, 61b) or in a wall part of the end-fitting surrounding the lock nut.

2. The assembly of claim 1 wherein the lock nut (31a, 41a, 51a, 61a) is fixed to the carcass (1, 31, 41, 51, 61, 71, 81) e.g. by screwing it onto the carcass (1, 31, 41, 51, 61, 71, 81) and the end-fitting (39, 79, 89, 99) comprises an annular holding groove into which the lock nut (31a, 41a, 51a, 61a) is placed.

3. The assembly of claim 1 or 2, wherein the lock nut (31a, 41a, 51a, 61a) is covered by a lock nut cover (31b, 41b, 51b, 61b) preferably of polymer, such as a polymer selected from polyamide, polyethylene, rubber, silicone or mixtures thereof.

4. The assembly of any one of the preceding claims 1-3, wherein the optical fiber (37, 47, 57, 67, 77, 87) is arranged in a groove of the carcass (1, 31, 41, 51, 61, 71, 81) in at least a sealing length section where the optical fiber (37, 47, 57, 67, 77, 87) passes the annular sealing, preferably the carcass (1, 31, 41, 51, 61, 71, 81) has an inner face facing the centerline of the bore and an opposite outer face and the groove in which the optical fiber (37, 47, 57, 67, 77, 87) is arranged in at least the sealing length section is provided in the outer face of the carcass(1, 31, 41, 51, 61, 71, 81).

5. The assembly of claim 4, wherein the optical fiber (37, 47, 57, 67, 77, 87) is loosely arranged in the groove of the carcass (1, 31, 41, 51, 61, 71, 81) in a least the sealing length section.

6. The assembly of claim 4, wherein the optical fiber (37, 47, 57, 67, 77, 87) is fixed in the groove of the carcass (1, 31, 41, 51, 61, 71, 81) in at least a part of the sealing length section, the fixing preferably being provided by a fixing polymer such at epoxy.

7. The assembly of any one of the preceding claims wherein the carcass (1, 31, 41, 51, 61, 71, 81) is fixed to the end-fitting (39, 79, 89, 99) along an annular fixing line at a position between the sealing length section and the rear end of the end-fitting, preferably the carcass (1, 31, 41, 51, 61, 71, 81) is fixed to the end-fitting (39, 79, 89, 99) at least partly be a mechanical fixing, preferably the fixing comprises both a mechanical and a chemical fixing.

8. The assembly of any one of the preceding claims 4-7 wherein the end-fitting (79, 89) comprises an end-fitting guiding groove crossing the annular fixing line of the carcass (1, 31, 41, 51, 61, 71, 81), the optical fiber (37, 47, 57, 67, 77, 87) exits the groove of the carcass (1, 31, 41, 51, 61, 71, 81) via the end-fitting (39, 79, 89, 99) guiding groove.

9. The assembly of any one of the preceding claims wherein the optical fiber (37, 47, 57, 67, 77, 87) exits the end-fitting (39, 79, 89, 99) via a passage in a wall section of the end-fitting (39, 79, 89, 99), where the passage in the wall section of the end-fitting advantageously is arranged in the rear end of the end-fitting (39, 79,89, 99).

10. The assembly of any one of the preceding claims wherein the annular sealing comprises one or more gaskets, such as one or more annular gaskets, preferably the carcass (1, 31, 41, 51, 61, 71, 81) comprises one or more carcass (1, 31, 41, 51, 61, 71, 81) cavities filled with epoxy in the areas where the carcass (1, 31, 41, 51, 61, 71, 81) is subjected to compression from the gaskets.

11. The assembly of any one of the preceding claims wherein the annular sealing comprises at least one locking ring arranged outside the innermost sealing sheath and arranged to fix the innermost sealing sheath (2, 32, 42, 52, 62, 72, 82) between the locking ring and the carcass, preferably the carcass (1, 31, 41, 51, 61, 71, 81) comprises one or more carcass cavities filled with epoxy in the areas where the carcass (1, 31, 41, 51, 61, 71, 81) is subjected to compression from the locking ring, preferably the innermost sealing sheath (2, 32, 42, 52, 62, 72, 82) comprises at least one annular groove and the locking ring comprises or holds an annular rib to engage the annular groove, the annular rib is preferably a gasket.

12. The assembly of any one of the preceding claims wherein the optical fiber (37, 47, 57, 67, 77, 87) exits the groove of the carcass (1, 31, 41, 51, 61, 71, 81) at a position between the annular sealing and the rear end of the end-fitting (39, 79, 89, 99), preferably at a position between the annular sealing and a position of terminating the carcass (1, 31, 41, 51, 61, 71, 81).

13. The assembly of any one of the preceding claims wherein the through opening of the end-fitting 39, (79, 89, 99) at least in a rear section between termination of the carcass (1, 31, 41, 51, 61, 71, 81) and the rear end comprises a protection arrangement for the optical fiber (37, 47, 57, 67, 77, 87), preferably in the form of a protecting sleeve or a groove in the end-fitting (39, 79, 89, 99), the optical fiber being arranged in the protection arrangement.

14. The assembly of any one of the preceding claims wherein the carcass (1, 31, 41, 51, 61, 71, 81) comprises at least one helically wound elongate armor element, preferably the carcass (1, 31, 41, 51, 61, 71, 81) comprises a plurality of elongate element windings along the length of the pipe provided by the at least one elongate armor element wherein the plurality of elongate element windings are interlocked.

15. The assembly of any one of the preceding claims wherein the carcass (1, 31, 41, 51, 61, 71, 81) in its outer surface facing the innermost sealing sheath (2, 32, 42, 52, 62, 72, 82) and/or the end-fitting (39, 79, 89, 99) comprises helical gap(s) between adjacent windings, wherein the helical gap(s) is/are at least partly filled with a polymer material, such as cured polymer material, preferably epoxy, in at least a part of the carcass (1, 31, 41, 51, 61, 71, 81) that extends into the through opening of the end-fitting (39, 79, 89, 99).

## Patentansprüche

1. Anordnung, die ein ungebundenes flexibles Rohr (30, 70, 80, 90) und ein zugehöriges Endstück (79, 89) mit einer Durchgangsöffnung mit einer Mittellinie und einem vorderen und einem hinteren Ende aufweist, wobei das ungebundene flexible Rohr eine innerste Dichtungshülle, die eine Bohrung mit einer Mittellinie definiert, und eine Karkasse (1, 31, 41, 51, 61, 71, 81) aufweist, die innerhalb der innersten Dichtungshülle (2, 32, 42, 52, 62, 72, 82) angeordnet ist, wobei sich die innerste Dichtungshülle (2, 72, 82) und die Karkasse (1, 31, 41, 51, 61, 71, 81) über das vordere Ende des Endstücks (39, 79, 89, 99) in die Durchgangsöffnung erstrecken, wobei die innerste Dichtungshülle (2, 32, 42, 52, 62, 72, 82) in einer ringförmigen Dichtung an dem Endstück (39, 79, 89, 99) befestigt ist, wobei sich die Karkasse (1, 31, 41, 51, 61, 71, 81) über die ringförmige Dichtung hinaus erstreckt, wobei das ungebundene flexible Rohr ferner eine optische Faser (37, 47, 57, 67, 77, 87) in der Bohrung aufweist, **dadurch gekennzeichnet, dass** die Befestigung der Karkasse (1, 31, 41, 51, 61, 71, 81) am Endstück (39, 79, 89, 99) eine Kontermutter (31a, 41a, 51a, 61a) aufweist, dass die optische Faser (37, 47, 57, 67, 77, 87) aus der Karkasse (1, 31, 41, 51, 61, 71, 81) über eine Führungsnut aus dem Endstück (39, 79, 89, 99) heraustritt, wobei die Führungsnut in der Kontermutter (31a, 41a, 51a, 61a) selbst, in einer Kontermutterabdeckung (31b, 41b, 51b, 61b) oder in einem die Kontermutter umgebenden Wandteil des Endstücks vorgesehen ist.

2. Anordnung nach Anspruch 1, wobei die Kontermutter (31a, 41a, 51a, 61a) an der Karkasse (1, 31, 41, 51, 61, 71, 81) z. B. durch Aufschrauben auf die Karkasse (1, 31, 41, 51, 61, 71, 81) befestigt ist, und das Endstück (39, 79, 89, 99) eine ringförmige Haltenut aufweist, in die die Kontermutter (31a, 41a, 51a, 61a) platziert ist.

3. Anordnung nach Anspruch 1 oder 2, wobei die Kontermutter (31a, 41a, 51a, 61a) durch eine Kontermutterabdeckung (31b, 41b, 51b, 61b) vorzugsweise aus Polymer, wie etwa einem Polymer ausgewählt aus Polyamid, Polyethylen, Gummi, Silikon oder Mischungen davon, abgedeckt ist.

4. Anordnung nach einem der vorhergehenden Ansprüche 1-3, wobei die optische Faser (37, 47, 57, 67, 77, 87) in einer Nut der Karkasse (1, 31, 41, 51, 61, 71, 81) in mindestens einem Dichtungslängenabschnitt, wo die optische Faser (37, 47, 57, 67, 77, 87) die ringförmige Dichtung passiert, angeordnet ist, wobei vorzugsweise die Karkasse (1, 31, 41, 51, 61, 71, 81) eine der Mittellinie der Bohrung zugewandte Innenfläche und eine gegenüberliegende Außenfläche aufweist, und wobei die Nut, in der die optische Faser (37, 47, 57, 67, 77, 87) in mindestens dem Dichtungslängenabschnitt angeordnet ist, in der Außenfläche der Karkasse (1, 31, 41, 51, 61, 71, 81) vorgesehen ist.

5. Anordnung nach Anspruch 4, wobei die optische Faser (37, 47, 57, 67, 77, 87) lose in der Nut der Karkasse (1, 31, 41, 51, 61, 71, 81) in mindestens dem Dichtungslängenabschnitt angeordnet ist.

6. Anordnung nach Anspruch 4, wobei die optische Faser (37, 47, 57, 67, 77, 87) in der Nut der Karkasse (1, 31, 41, 51, 61, 71, 81) in mindestens einem Teil des Dichtungslängenabschnitts fixiert ist, wobei das Fixieren vorzugsweise durch ein Fixierungspolymer wie etwa Epoxid bereitgestellt wird.

7. Anordnung nach einem der vorhergehenden Ansprüche, wobei die Karkasse (1, 31, 41, 51, 61, 71, 81) entlang einer ringförmigen Befestigungslinie an einer Position zwischen dem Dichtungslängenabschnitt und dem hinteren Ende des Endstücks am Endstück (39, 79, 89, 99) befestigt ist, wobei vorzugsweise die Karkasse (1, 31, 41, 51, 61, 71, 81) am Endstück (39, 79, 89, 99) mindestens teilweise durch eine mechanische Fixierung fixiert ist, wobei vorzugsweise die Fixierung sowohl eine mechanische als auch eine chemische Fixierung aufweist.

8. Anordnung nach einem der vorhergehenden Ansprüche 4-7, wobei das Endstück (79, 89) eine Endstück-Führungsnut aufweist, die die ringförmige Befestigungslinie der Karkasse (1, 31, 41, 51, 61, 71, 81) kreuzt, wobei die optische Faser (37, 47, 57, 67, 77, 87) die Nut der Karkasse (1, 31, 41, 51, 61, 71, 81) über die Endstück-(39, 79, 89, 99)-Führungsnut verlässt.

9. Anordnung nach einem der vorhergehenden Ansprüche, wobei die optische Faser (37, 47, 57, 67, 77, 87) das Endstück (39, 79, 89, 99) über einen Durchgang in einem Wandabschnitt des Endstücks (39, 79, 89, 99) verlässt, wobei der Durchgang im Wandabschnitt des Endstücks vorteilhafterweise im hinteren Ende des Endstücks (39, 79, 89, 99) angeordnet ist.

10. Anordnung nach einem der vorhergehenden Ansprüche, wobei die ringförmige Dichtung eine oder mehrere Dichtungen aufweist, wie etwa eine oder mehrere ringförmige Dichtungen, wobei die Karkasse (1, 31, 41, 51, 61, 71, 81) vorzugsweise eine oder mehrere mit Epoxid gefüllte Karkassen-(1, 31, 41, 51, 61, 71, 81)-Hohlräume in den Bereichen aufweist, in denen die Karkasse (1, 31, 41, 51, 61, 71, 81) von den Dichtungen zusammengepresst wird.

11. Anordnung nach einem der vorhergehenden Ansprüche, wobei die ringförmige Dichtung mindestens einen Klemmring aufweist, der außerhalb der innersten Dichtungshülle angeordnet und angeordnet ist, um die innerste Dichtungshülle (2, 32, 42, 52, 62, 72, 82) zwischen dem Klemmring und der Karkasse zu fixieren, wobei die Karkasse (1, 31, 41, 51, 61, 71, 81) vorzugsweise einen oder mehrere mit Epoxid gefüllte Karkassenhohlräume in den Bereichen aufweist, in denen die Karkasse (1, 31, 41, 51, 61, 71, 81) durch den Klemmring zusammengepresst wird, wobei vorzugsweise die innerste Dichtungshülle (2, 32, 42, 52, 62, 72, 82) mindestens eine ringförmige Nut aufweist und der Klemmring eine ringförmige Rippe zum Eingreifen in die ringförmige Nut aufweist oder diese hält, wobei die ringförmige Rippe vorzugsweise eine Dichtung ist.

12. Anordnung nach einem der vorhergehenden Ansprüche, wobei die optische Faser (37, 47, 57, 67, 77, 87) die Nut der Karkasse (1, 31, 41, 51, 61, 71, 81) an einer Position zwischen der ringförmigen Dichtung und dem hinteren Ende des Endstückes (39, 79, 89, 99) verlässt, vorzugsweise an einer Position zwischen der ringförmigen Dichtung und einer die Karkasse (1, 31, 41, 51, 61, 71, 81) abschließenden Position.

13. Anordnung nach einem der vorhergehenden Ansprüche, wobei die Durchgangsöffnung des Endstücks (39, 79, 89, 99) mindestens in einem hinteren Abschnitt zwischen dem Abschluss der Karkasse (1, 31, 41, 51, 61 71, 81) und dem hinteren Ende eine Schutzanordnung für die optische Faser (37, 47, 57, 67, 77, 87) aufweist, vorzugsweise in Form einer Schutzhülse oder einer Nut im Endstück (39, 79, 89, 99), wobei die optische Faser in der Schutzanordnung angeordnet ist.

14. Anordnung nach einem der vorhergehenden Ansprüche, wobei die Karkasse (1, 31, 41, 51, 61, 71, 81) mindestens ein schraubenförmig gewickeltes längliches Armierungselement aufweist, wobei vorzugsweise die Karkasse (1, 31, 41, 51, 61, 71, 81) eine Vielzahl von länglichen Elementwicklungen entlang der Länge des Rohrs aufweist, die durch das mindestens eine längliche Armierungselement bereitgestellt sind, wobei die Vielzahl von länglichen Elementwicklungen ineinander greifen.

15. Anordnung nach einem der vorhergehenden Ansprüche, wobei die Karkasse (1, 31, 41, 51, 61, 71, 81) in ihrer äußeren Oberfläche, die der innersten Dichtungshülle (2, 32, 42, 52, 62, 72, 82) zugewandt ist, und/oder das Endstück (39, 79, 89, 99) einen schraubenförmigen Spalt/schraubenförmige Spalte zwischen benachbarten Wicklungen aufweist, wobei der schraubenförmige Spalt/die schraubenförmige Spalte mindestens teilweise mit einem Polymermaterial, wie etwa gehärtetem Polymermaterial, vorzugsweise Epoxid, in mindestens einem Teil der Karkasse (1, 31, 41, 51, 61, 71, 81), der sich in die Durchgangsöffnung des Endstücks (39, 79, 89, 99) erstreckt, gefüllt ist/sind.

## Revendications

1. Ensemble comprenant un tuyau flexible non collé (30, 70, 80, 90) et un embout associé (79, 89) ayant une ouverture traversante avec une ligne centrale et des extrémités avant et arrière, le tuyau flexible non collé comprend une gaine d'étanchéité la plus intérieure définissant un trou ayant une ligne centrale et une carcasse (1, 31, 41, 51, 61, 71, 81) agencée à l'intérieur de la gaine d'étanchéité la plus intérieure (2, 32, 42, 52, 62, 72, 82) dans lequel la gaine d'étanchéité la plus intérieure (2, 72, 82) et la carcasse (1, 31, 41, 51, 61, 71, 81) s'étendent dans l'ouverture traversante via l'extrémité avant de l'embout (39, 79, 89, 99) dans lequel la gaine d'étanchéité la plus intérieure (2, 32, 42, 52, 62, 72, 82) est fixée dans une étanchéité annulaire à l'embout (39, 79, 89, 99), la carcasse (1, 31, 41, 51, 61, 71, 81) s'étend au-delà de l'étanchéité annulaire, le tuyau flexible non collé comprend en outre une fibre optique (37, 47, 57, 67, 77, 87) dans le trou,
**caractérisé en ce que** la fixation de la carcasse (1, 31, 41, 51, 61, 71, 81) à l'embout (39, 79, 89, 99) comprend un écrou autobloquant (31a, 41a, 51a, 61a), la fibre optique (37, 47, 57, 67, 77, 87) sort de la carcasse (1, 31, 41, 51, 61, 71, 81) via une rainure de guidage à l'extérieur de l'embout (39, 79, 89, 99), ladite rainure de guidage est disposée dans l'écrou autobloquant (31a, 41a, 51a, 61a) lui-même, dans un cache (31b, 41b, 51b, 61b) d'écrou autobloquant ou dans une partie paroi de l'embout entourant l'écrou autobloquant.

2. Ensemble selon la revendication 1 dans lequel l'écrou autobloquant (31a, 41a, 51a, 61a) est fixé à la carcasse (1, 31, 41, 51, 61, 71, 81) par exemple en le vissant sur la carcasse (1, 31, 41, 51, 61, 71, 81) et l'embout (39, 79, 89, 99) comprend une rainure de maintien annulaire dans laquelle l'écrou autobloquant (31a, 41a, 51a, 61a) est placé.

3. Ensemble selon la revendication 1 ou 2, dans lequel l'écrou autobloquant (31a, 41a, 51a, 61a) est recouvert par un cache (31b, 41b, 51b, 61b) d'écrou autobloquant de préférence de polymère, tel qu'un polymère sélectionné parmi le polyamide, le polyéthylène, le caoutchouc, la silicone ou des mélanges de ceux-ci.

4. Ensemble selon l'une quelconque des revendications 1-3, dans lequel la fibre optique (37, 47, 57, 67, 77, 87) est agencée dans une rainure de la carcasse (1, 31, 41, 51, 61, 71, 81) dans au moins une section de longueur d'étanchéité où la fibre optique (37, 47, 57, 67, 77, 87) passe l'étanchéité annulaire, de préférence la carcasse (1, 31, 41, 51, 61, 71, 81) a une face intérieure faisant face à la ligne centrale du trou et une face extérieure opposée et la rainure dans laquelle la fibre optique (37, 47, 57, 67, 77, 87) est agencée dans au moins la section de longueur d'étanchéité est disposée dans la face extérieure de la carcasse (1, 31, 41, 51, 61, 71, 81).

5. Ensemble selon la revendication 4, dans lequel la fibre optique (37, 47, 57, 67, 77, 87) est agencée librement dans la rainure de la carcasse (1, 31, 41, 51, 61, 71, 81) dans au moins la section de longueur d'étanchéité.

6. Ensemble selon la revendication 4, dans lequel la fibre optique (37, 47, 57, 67, 77, 87) est fixée dans la rainure de la carcasse (1, 31, 41, 51, 61, 71, 81) dans au moins la section de longueur d'étanchéité.

7. Ensemble selon l'une quelconque des revendications précédentes dans lequel la carcasse (1, 31, 41, 51, 61, 71, 81) est fixée à l'embout (39, 79, 89, 99) le long d'une ligne de fixation annulaire dans une position entre la section de longueur d'étanchéité et l'extrémité arrière de l'embout, de préférence la carcasse (1, 31, 41, 51, 61, 71, 81) est fixée à l'embout (39, 79, 89, 99) au moins partiellement par une fixation mécanique, de préférence la fixation comprend à la fois une fixation mécanique et une fixation chimique.

8. Ensemble selon l'une quelconque des revendications 4-7 dans lequel l'embout (79, 89) comprend une rainure de guidage d'embout croisant la ligne de fixation annulaire de la carcasse (1, 31, 41, 51, 61, 71, 81), la fibre optique (37, 47, 57, 67, 77, 87) sort de la rainure de la carcasse (1, 31, 41, 51, 61, 71, 81) via la rainure de guidage d'embout (39, 79, 89, 99).

9. Ensemble selon l'une quelconque des revendications précédentes dans lequel la fibre optique (37, 47, 57, 67, 77, 87) sort de l'embout (39, 79, 89, 99) via un passage dans une section de paroi de l'embout (39, 79, 89, 99), où le passage dans la section de paroi de l'embout est avantageusement agencé dans l'extrémité arrière de l'embout (39, 79, 89, 99).

10. Ensemble selon l'une quelconque des revendications précédentes dans lequel l'étanchéité annulaire comprend un ou plusieurs joints, tels qu'un ou plusieurs joints annulaires, de préférence la carcasse (1, 31, 41, 51, 61, 71, 81) comprend une ou plusieurs cavités de carcasse (1, 31, 41, 51, 61, 71, 81) remplies d'époxy dans les zones où la carcasse (1, 31, 41, 51, 61, 71, 81) est soumise à une compression à partir des joints.

11. Ensemble selon l'une quelconque des revendications précédentes dans lequel l'étanchéité annulaire comprend au moins une bague de blocage agencée à l'extérieur de la gaine d'étanchéité la plus intérieure et agencée pour fixer la gaine d'étanchéité la plus intérieure (2, 32, 42, 52, 62, 72, 82) entre la bague de blocage et la carcasse, de préférence la carcasse (1, 31, 41, 51, 61, 71, 81) comprend une ou plusieurs cavités de carcasse remplies d'époxy dans les zones où la carcasse (1, 31, 41, 51, 61, 71, 81) est soumise à une compression à partir de la bague de blocage, de préférence la gaine d'étanchéité la plus intérieure (2, 32, 42, 52, 62, 72, 82) comprend au moins une rainure annulaire et la bague de blocage comprend ou maintient une nervure annulaire pour entrer en prise avec la rainure annulaire, la nervure annulaire est de préférence un joint.

12. Ensemble selon l'une quelconque des revendications précédentes dans lequel la fibre optique (37, 47, 57, 67, 77, 87) sort de la rainure de la carcasse (1, 31, 41, 51, 61, 71, 81) dans une position entre l'étanchéité annulaire et l'extrémité arrière de l'embout (39, 79, 89, 99), de préférence dans une position entre l'étanchéité annulaire et une position de fin de la carcasse (1, 31, 41, 51, 61, 71, 81).

13. Ensemble selon l'une quelconque des revendications précédentes dans lequel l'ouverture traversante de l'embout (39, 79, 89, 99) au moins dans une section arrière entre la fin de la carcasse (1, 31, 41, 51, 61, 71, 81) et l'extrémité arrière comprend un agencement de protection pour la fibre optique (37, 47, 57, 67, 77, 87), de préférence sous la forme d'un manchon de protection ou d'une rainure dans l'embout (39, 79, 89, 99), la fibre optique étant agencée dans l'agencement de protection.

14. Ensemble selon l'une quelconque des revendications précédentes dans lequel la carcasse (1, 31, 41, 51, 61, 71, 81) comprend au moins un élément d'armure allongé hélicoïdalement enroulé, de préférence la carcasse (1, 31, 41, 51, 61, 71, 81) comprend une pluralité d'enroulements d'élément allongé le long de la longueur du tuyau fournis par l'au moins un élément d'armure allongé dans lequel la pluralité d'enroulements d'élément allongé sont bloqués entre eux.

15. Ensemble selon l'une quelconque des revendications précédentes dans lequel la carcasse (1, 31, 41, 51, 61, 71, 81) dans sa surface extérieure faisant face à la gaine d'étanchéité la plus intérieure (2, 32, 42, 52, 62, 72, 82) et/ou l'embout (39, 79, 89, 99) comprend un(des) espace(s) hélicoïdal(aux) entre des enroulements adjacents, dans lequel le(les) espace (s) hélicoïdal(aux) est/sont au moins partiellement rempli(s) d'un matériau polymère, tel qu'un matériau polymère durci, de préférence de l'époxy, dans au moins une partie de la carcasse (1, 31, 41, 51, 61, 71, 81) qui s'étend dans l'ouverture traversante de l'embout (39, 79, 89, 99).
